# EUROPÄISCHE PATENTSCHRIFT

(11) **EP 2 806 197 B1**
(45) Veröffentlichungstag und Bekanntmachung des Hinweises auf die Patenterteilung: **05.07.2017**
(21) Anmeldenummer: 14169087.5
(22) Anmeldetag: 20.05.2014
(51) Int. Cl.: F16K 35/02, F16K 35/04, F16K 11/078

(54) **Einhebelventil, insbesondere sanitäres Einhebel-Mischventil**
Single-lever valve, in particular sanitary single lever mixing valve
Robinet à mono-commande, en particulier mitigeur à mono-commande

(30) Priorität: 23.05.2013 DE 102013209627
(43) Veröffentlichungstag der Anmeldung: 26.11.2014
(73) Patentinhaber: Hansgrohe SE, 77761 Schiltach (DE)
(72) Erfinder: King, Jürgen, 78730 Lauterbach (DE)
(74) Vertreter: Patentanwälte Ruff, Wilhelm, Beier, Dauster & Partner mbB

(56) Entgegenhaltungen:
- DE-A1- 4 322 207
- DE-A1-102006 012 303
- DE-B3-102006 035 886
- US-B1- 7 357 154

## Beschreibung

Die Erfindung bezieht sich auf ein Einhebelventil mit einem beweglich angeordneten Ventilkörper, einem Betätigungshebel, der einen stielförmigen Bedienabschnitt, einen demgegenüber verdickten Lagerabschnitt und einen mit dem Ventilkörper gekoppelten Ventilkörperkoppelabschnitt aufweist, und einer Lageraufnahme, in welcher der Betätigungshebel mit seinem Lagerabschnitt innerhalb eines ein- oder zweidimensionalen Verstellbereichs beweglich aufgenommen ist, wobei der Verstellbereich mindestens eine Schwenkbewegung des Betätigungshebels um eine zu einer Längsachse des Betätigungshebels nichtparallele, sich durch den verdickten Lagerabschnitt hindurch erstreckende Schwenkachse umfasst.

Derartige Einhebelventile werden beispielsweise als Einhebel-Mischventile, auch Joystick-Mischventile genannt, in Sanitärarmaturen verwendet, um sowohl die Durchflussmenge als auch das Mischungsverhältnis von Kaltwasser und Warmwasser mit alleiniger Betätigung des Betätigungshebels bzw. Joysticks einzustellen. Als Ventilkörper dient bei diesen sanitären Einhebel-Mischventilen meist eine in einer Steuerebene beweglich angeordnete Steuerscheibe, an die der Betätigungshebel mit seinem Ventilkörperkoppelabschnitt gekoppelt ist und die gegen eine parallele, gehäusefeste Steuerscheibe anliegt, wobei beide Steuerscheiben geeignete wasserführende Öffnungen aufweisen.

Ein solches sanitäres Einhebel-Mischventil ist in der Offenlegungsschrift DE 10 2005 001 300 A1 offenbart. Beim dortigen Betätigungshebel ist der Lagerabschnitt kugelförmig verdickt und in einer entsprechenden kugelschalenförmigen Lageraufnahme des Ventils, dort speziell eines Kartuschengehäuses des Ventils, aufgenommen. Die kugelgelenkige Lagerung des Betätigungshebels ermöglicht sowohl eine Durchflussmengenregelung durch Verschwenken des Betätigungshebels um eine zu seiner Längsachse senkrechte Durchmesserachse des kugeligen Lagerabschnitts als auch eine Regulierung des Kaltwasser/Warmwasser-Mischungsverhältnisses durch Verschwenken des Betätigungshebels um eine weitere, zur Längsachse des Betätigungshebels nichtparallele Durchmesserachse des kugeligen Lagerabschnitts. Die Lageraufnahme beinhaltet eine über der beweglichen Steuerscheibe angeordnete untere Lagerschale und eine von einem Kartuschendeckel gebildete obere Lagerschale, aus welcher der Betätigungshebel mit seinem stielförmigen Bedienabschnitt nach oben herausragt. Auf der gegenüberliegenden Seite des kugeligen Lagerabschnitts weist der Betätigungshebel als Ventilkörperkoppelabschnitt einen Koppelstutzen auf, mit dem er in eine zugehörige Koppelstutzenaufnahme einer Halterung der beweglichen Steuerscheibe eingreift.

Es sind auch bereits verschiedentlich Einhebel-Mischventile für Sanitärarmaturen vorgeschlagen worden, bei denen durch entsprechende Rastmittel, die mit einer Betätigungsbewegung des Betätigungshebels selbsttätig einrastbar und ausrastbar sind, eine oder mehrere Rastpositionen des Betätigungshebels innerhalb seines Verstellbereichs definiert sind, beispielsweise eine sogenannte Sparstellung in einer Teilöffnungsstellung der Durchflussmengenregelung, um dem Benutzer ein haptisches Signal eines erhöhten Wasserverbrauchs bei Überschreiten dieser Rastposition in Ventilöffnungsrichtung zu geben. Diese Rastmittel sind häufig in einem Gehäuseaustrittsbereich angeordnet, in welchem der Betätigungshebel aus einem Ventilgehäuse, wie einem Kartuschengehäuse, austritt. In der Patentschrift DE 10 2009 048 487 B4 sind derartige Ventile offenbart, bei denen das Rastmittel eine Druckfeder und einen oder zwei gegenüberliegende Rastnocken, z.B. Raststifte, die in eine als durchgehende Bohrung oder Sackbohrung ausgebildete Querbohrung im Austrittsbereich des Betätigungshebels aus einer ventilgehäuseseitigen Lagerhülse eingefügt sind, sowie eine damit zusammenwirkende Rastbahn oder Rastvertiefung beinhaltet, die an einer Innenseite der Lagerhülse ausgebildet ist. In einer alternativen Ausführung des Rastmittels sind in eine untere Stirnseite der Lagerhülse zwei axiale Sackbohrungen eingebracht, in die jeweils eine Druckfeder mit einem Rastnocken eingesetzt ist, der mit einer Rastbahn an einer oberen Stirnseite einer Halterung der beweglichen Steuerscheibe zusammenwirkt.

In der Offenlegungsschrift DE 10 2006 012 303 A1 ist ein Einhebel-Mischventil mit einem aus einem Ventilgehäuse herausgeführten Stellhebel offenbart, der von einer im Ventilgehäuse angeordneten Buchse auf einer Schwenkachse gehalten ist, so dass er in einer Schwenkbahn der Buchse verschwenkbar ist. An zwei Seitenwänden der Schwenkbahn ist jeweils eine Ausnehmung ausgebildet, die sich von einer äußeren Buchsenstirnseite bis nahe der Schwenkachse erstreckt, wobei in jeder Ausnehmung ein federnder Rastkörper mit wenigstens einem Rastnocken angeordnet ist, der mit wenigstens einer am Stellhebel vorgesehenen Rastnase zusammenwirkt. Der Stellhebel weist in einem Bedienabschnitt und einem Lagerabschnitt, in welchem er schwenkbar an der Buchse gehalten ist, einen konstanten rechteckigen Querschnitt auf.

Weitere herkömmliche Einhebelventile mit Rastmitteln sind in den Patentschriften US 7.357.154 B1 und DE 10 2006 035 886 B3 sowie der Offenlegungsschrift DE 43 22 207 A1 offenbart.

Der Erfindung liegt als technisches Problem die Bereitstellung eines Einhebelventils der eingangs genannten Art zugrunde, das gegenüber dem oben erwähnten Stand der Technik insbesondere eine neuartige, vorteilhafte Rastmittelrealisierung für die Betätigungshebelbewegung beinhaltet.

Die Erfindung löst dieses Problem durch die Bereitstellung eines Einhebelventils mit den Merkmalen des Anspruchs 1. Das erfindungsgemäße Einhebelventil weist mindestens ein Rastmittel auf, das in einer eingerasteten Stellung eine zugehörige Rastposition des Betätigungshebels innerhalb seines Verstellbereichs definiert und mit einer Betätigungsbewegung des Betätigungshebels selbsttätig einrastbar und ausrastbar ist und ein Rastelement sowie ein mit diesem zusammenwirkendes Gegenrastelement beinhaltet, von denen das eine am verdickten Lagerabschnitt des Betätigungshebels und das andere an der Lageraufnahme ausgebildet ist.

Das Rastmittel befindet sich somit beim erfindungsgemäßen Einhebelventil im Bereich der Lagerung des Betätigungshebels und damit relativ nah am jeweiligen Drehpunkt bzw. an der jeweiligen Schwenkachse des Betätigungshebels. Dies hat verglichen mit einer weiter vom Drehpunkt bzw. der Schwenkachse entfernten Positionierung z.B. im Bedienabschnitt oder im Ventilkörperkoppelabschnitt des Betätigungshebels den Vorteil, dass aufgrund Hebelwirkung eine relativ geringe Bedienkraft ausreicht, um den Betätigungshebel aus der Rastposition auszurasten. Dies bedeutet gleichzeitig, dass das Rastmittel bei Bedarf mit einer relativ hohen Vorspannkraft in Einrastrichtung ausgeführt sein kann, was ein sicheres Einrasten fördert, ohne dass der Benutzer einen unerwünscht hohen Kraftaufwand zum Ausrasten des Rastmittels benötigt, was ihn im Bewegungsablauf der Ventilbetätigung stören könnte. Ein weiterer Vorteil dieser erfindungsgemäßen Rastmittelpositionierung liegt darin, dass im verdickten Lagerabschnitt des Betätigungshebels problemlos ausreichend Bauraum für die Unterbringung des Rastelements oder Gegenrastelements vorhanden ist, insbesondere mehr Bauraum als im stielförmigen Bedienabschnitt oder im Ventilkörperkoppelabschnitt des Betätigungshebels. Selbst bei kleinen Ventilbauformen kann das Rastmittel dadurch relativ groß gehalten werden, was seine Funktion begünstigt und konstruktiven Aufwand einsparen kann.

Je nach Auslegung des Rastmittels kann die Rastposition des Betätigungshebels ein nulldimensionaler, eindimensionaler oder zweidimensionaler Teilbereich seines Verstellbereichs sein. Im Fall des nulldimensionalen Teilbereichs korrespondiert die Rastposition punktuell mit einer entsprechenden Stellung des Betätigungshebels, im Fall des eindimensionalen Teilbereichs liegt die Rastposition über einen bestimmten linearen Verstellweg des Betätigungshebels hinweg vor, im Fall des zweidimensionalen Teilbereichs liegt die Rastposition über eine entsprechende Teilfläche eines flächigen, zweidimensionalen Verstellbereichs des Betätigungshebels hinweg vor. Letzteres kann zum Beispiel durch die sogenannte Sparstellung bei einem sanitären Mischventil gegeben sein. In diesem Fall liegt typischerweise ein zweidimensionaler Verstellbereich zur Durchflussmengenregelung sowie zur Kaltwasser/Warmwasser-Mischungsregelung vor, wobei die Sparstellung einen Teilflächenbereich niedrigerer Durchflussmenge vom übrigen Verstellbereich höherer Durchflussmenge abgrenzt.

Gemäß einem Aspekt der Erfindung beinhaltet das Rastmittel einen elastisch beweglich gehaltenen Rastnocken als Rastelement oder Gegenrastelement und eine korrespondierende Rastausnehmung als Gegenrastelement bzw. Rastelement. Der Rastnocken kann z.B. als Raststift, Rastbolzen, Rastnase, Rastzapfen oder dgl. ausgebildet sein und mit elastischer Rastkraft seine einrastende Stellung in der Rastausnehmung einnehmen, aus der er durch Überwinden der elastischen Rastkraft wieder ausgerastet werden kann. Die Rastausnehmung kann als Vertiefung, Öffnung, Nut etc. ausgebildet sein. Rastnocken und Rastausnehmung sind in ihrer Formgebung geeignet aufeinander abgestimmt, um selbsttätig einrastend und ausrastend zusammenwirken zu können und bei Bedarf die weiteren gewünschten Funktionalitäten zu erfüllen, wie die oben angesprochene Zentrierfunktion. Spezieller sind mindestens zwei Rastmittel mit unterschiedlichen zugehörigen Rastpositionen des Betätigungshebels vorgesehen, die sich einen gemeinsamen Rastnocken als Rastelement teilen oder zwei Rastnocken beinhalten, die mit einem zwischengefügten elastischen Element, z.B. einer auf Druck vorgespannten Schraubenfeder, in einer gemeinsamen Durchgangsbohrung des verdickten Lagerabschnitts angeordnet sind. Dies stellt eine konstruktiv vorteilhafte Realisierung zweier verschiedener Betätigungshebel-Rastpositionen dar.

Gemäß einem weiteren Aspekt der Erfindung sind der verdickte Lagerabschnitt kugelförmig und die Lageraufnahme korrespondierend kugelschalenförmig ausgebildet, und das Rastmittel weist eine Rastbeweglichkeit mit zum kugelförmigen Lagerabschnitt radialer Hauptkomponente auf, d.h. die Rastbewegung des Rastmittels erfolgt ganz oder überwiegend in der radialen Richtung des kugelförmigen Lagerabschnitts. Unter der Charakterisierung des verdickten Lagerabschnitts als kugelförmig ist hierbei zu verstehen, dass der Lagerabschnitt des Betätigungshebels eine Kugelform mindestens in dem Bereich aufweist, in welcher er mit der entsprechend kugelschalenförmigen Lageraufnahme zur Bildung der Lagerung des Betätigungshebels zusammenwirkt. Der Lagerabschnitt muss dazu nicht zwingend vollständig kugelförmig sein, er kann beispielsweise auch halbkugelförmig oder in anderer Weise teilkugelförmig ausgebildet sein. Analoges gilt für die Kugelschalenform der Lageraufnahme. Das Rastelement und das Gegenrastelement des Rastmittels sind geeignet im kugelförmigen Lagerabschnitt und der kugelschalenförmigen Lageraufnahme angeordnet, und mit ihrer radialen Hauptkomponente sorgt die Rastbeweglichkeit des Rastmittels für das ein- und ausrastende Zusammenwirken von Rastelement und Gegenrastelement im kugelförmigen Lagerabschnitt bzw. in der diesem radial gegenüberliegenden Lageraufnahme.

Der kugelförmige Lagerabschnitt und die kugelschalenförmige Lageraufnahme sind durch ein Kulissenführungsmittel miteinander gekoppelt, wobei das Kulissenführungsmittel eine Kulissenbahn einerseits und einen darin beweglich geführten Kulissennocken andererseits beinhaltet und eine Schwenkbewegung des Betätigungshebels um eine zu dessen Längsachse senkrechte erste Durchmesserachse des kugelförmigen Lagerabschnitts definiert. Im Fall eines sanitären Mischventils kann diese kulissengeführte Schwenkbewegung des Betätigungshebels zum Beispiel zur Durchflussmengenregelung dienen. Zusätzlich ist der Betätigungshebel um den Kulissennocken schwenkbeweglich, d.h. die Längsachse des Kulissennockens bildet eine weitere, in ihrer räumlichen Lage veränderliche Schwenkachse des Betätigungshebels, wobei die Längsachse des Kulissennockens eine zur ersten nichtparallele zweite Durchmesserachse des kugelförmigen Lagerabschnitts bildet. Da der Kulissennocken entlang der Kulissenbahn verschiebbar ist, ist dadurch insgesamt ein ungefähr dreieckförmiger zweidimensionaler Verstellbereich für den Betätigungshebel gebildet, dessen Eckbereiche im Fall eines sanitären Mischventils der Schließstellung, dem maximalen Kaltwasserzufluss bzw. dem maximalen Warmwasserzufluss entsprechen können.

In einer Weiterbildung der Erfindung entspricht die Rastposition des Betätigungshebels einer Ventilschließstellung oder einer vollen Ventilöffnungsstellung oder einer Ventilteilöffnungsstellung. Bei der Ventilschließstellung handelt es sich üblicherweise um einen punktuellen, nulldimensionalen Teilbereich des Betätigungshebel-Verstellbereichs. Wenn der Ventilschließstellung auf diese Weise eine Rastposition zugeordnet wird, kann dies zum sicheren Erreichen der Schließstellung beitragen und vermeiden, dass das Ventil unabsichtlich nicht ganz in seine Schließstellung gelangt, was bei Sanitärventilen zu unerwünschten Wasserverlusten führen kann. Die volle Ventilöffnungsstellung kann z.B. bei reinen Durchflussmengenventilen ebenfalls ein nulldimensionaler Teilbereich des Betätigungshebel-Verstellbereichs sein, bei sanitären Mischventilen aber auch ein sich über den Kaltwasser-Warmwasser-Verstellweg hinweg eindimensional erstreckender Teilbereich eines zweidimensionalen Betätigungshebel-Verstellbereichs. Bei der Ventilteilöffnungsstellung kann es sich zum Beispiel um die bereits erwähnte Sparstellung handeln.

In einer Weiterbildung der Erfindung ist das Rastmittel als elastisch nachgiebiges Rastmittel, das in Richtung seiner einrastenden Stellung vorgespannt ist, und/oder als selbstzentrierendes Rastmittel ausgebildet, das den Betätigungshebel zentriert in die zugehörige Rastposition bringt. Ersteres begünstigt das selbsttätige Einrasten des Rastmittels. Letzteres kann beispielsweise durch entsprechendes formschlüssiges und/oder kraftschlüssiges Zusammenwirken von Rastelement und Gegenrastelement bewirkt werden und dazu beitragen, dass der Betätigungshebel zuverlässig in die betreffende Rastposition gelangt.

In weiterer Ausgestaltung der Erfindung dient der Kulissennocken zugleich als Rastnocken des betreffenden Rastmittels. Diese Doppelfunktion eines Nockens kann den konstruktiven Realisierungsaufwand gering halten.

In anderweitiger Ausgestaltung der Erfindung sind der Kulissennocken und ein Rastnocken des betreffenden Rastmittels als separate Bauteile in zugehörigen radialen Sackbohrungen des kugelförmigen Lagerabschnitts angeordnet. Der kugelförmige Lagerabschnitt dient somit in dieser Ausprägung der Erfindung sowohl zur Lagerung des Betätigungshebels als auch zur Unterbringung des Kulissennockens und des Rastnockens. Der Kulissennocken kann seinerseits je nach Bedarf zur Erfüllung seiner Kulissenführungsfunktion oder alternativ als kombinierter Kulissen- und Rastnocken ausgeführt sein.

In anderweitiger Ausgestaltung der Erfindung umfasst die kugelschalenförmige Lageraufnahme einen unteren und einen oberen Lagerschalenteil, die als separate, miteinander verbundene Bauteile ausgebildet sind. Dabei sind das Kulissenführungsmittel und das mindestens eine Rastmittel zum Einen am verdickten Betätigungshebel-Lagerabschnitt und zum Anderen beide am unteren Lagerschalenteil oder alternativ beide am oberen Lagerschalenteil oder alternativ das eine am unteren und das andere am oberen Lagerschalenteil angeordnet.

Vorteilhafte Ausführungsformen der Erfindung sind in den Zeichnungen dargestellt und werden nachfolgend beschrieben. Hierbei zeigen:
- Fig. 1: eine Längsschnittansicht einer Mischerkartusche als vorliegend interessierender Teil eines sanitären Einhebel-Mischventils in einer eingerasteten Ventilschließstellung mit kombiniertem Kulissen-/Rastnocken und in einem unteren Lagerschalenteil vorgesehener Kulissen-/Rastbahn,
- Fig. 2: die Längsschnittansicht von Fig. 1 in einer Ventilöffnungsstellung,
- Fig. 3: eine Längsschnittansicht entsprechend Fig. 1 für eine Mischventilvariante mit getrennten Kulissen- und Rastnocken und in einem oberen Lagerschalenteil vorgesehener Rastausnehmung,
- Fig. 4: eine Längsschnittansicht entsprechend Fig. 2 für die Mischventilvariante von Fig. 3,
- Fig. 5: eine Längsschnittansicht entsprechend Fig. 3 für eine Mischventilvariante mit in einem unteren Lagerschalenteil vorgesehener Rastausnehmung,
- Fig. 6: eine Längsschnittansicht entsprechend Fig. 4 für die Mischventilvariante von Fig. 5,
- Fig. 7: eine Perspektivansicht des unteren Lagerschalenteils der Mischventilvariante von Fig. 5,
- Fig. 8: eine Längsschnittansicht entsprechend Fig. 5 für eine Mischventilvariante mit vier Raststellungen,
- Fig. 9: eine Längsschnittansicht entsprechend Fig. 6 für die Mischventilvariante von Fig. 8,
- Fig. 10: eine Perspektivansicht des unteren Lagerschalenteils des Mischventils von Fig. 8,
- Fig. 11: eine Längsschnittansicht entsprechend Fig. 8 für eine Mischventilvariante mit Sparstellungs-Rastung,
- Fig. 12: eine Längsschnittansicht entsprechend Fig. 9 für die Mischventilvariante von Fig. 11,
- Fig. 13: eine Perspektivansicht des unteren Lagerschalenteils des Mischventils von Fig. 11,
- Fig. 14: eine Längsschnittansicht entsprechend Fig. 11 für eine Mischventilvariante mit Schließstellungs- und Teilstellungs-Rastung,
- Fig. 15: die Längsschnittansicht von Fig. 14 mit dem Ventil in der Teilstellungs-Rastung,
- Fig. 16: die Längsschnittansicht von Fig. 14 mit dem Ventil in Öffnungsstellung,
- Fig. 17: eine Perspektivansicht des unteren Lagerschalenteils des Mischventils von Fig. 14,
- Fig. 18: eine Längsschnittansicht einer Mischventilvariante mit zwei separaten Rastausnehmungen im unteren Lagerschalenteil in rastender Ventilschließstellung,
- Fig. 19: die Längsschnittansicht von Fig. 18 mit dem Ventil in einer rastenden Teilöffnungsstellung,
- Fig. 20: die Längsschnittansicht von Fig. 18 mit dem Ventil in einer Öffnungsstellung,
- Fig. 21: eine Perspektivansicht des unteren Lagerschalenteils des Ventils von Fig. 18,
- Fig. 22: eine Längsschnittansicht einer Mischventilvariante mit im unteren Lagerschalenteil angeordnetem Rastnocken in rastender Ventilschließstellung,
- Fig. 23: die Längsschnittansicht von Fig. 22 mit dem Ventil in einer Öffnungsstellung,
- Fig. 24: eine Längsschnittansicht entsprechend Fig. 22 für eine Mischventilvariante mit formelastischem Rastnocken am unteren Lagerschalenteil,
- Fig. 25: eine Längsschnittansicht einer Mischventilvariante mit durchgehender Aufnahmebohrung für Kulissen- und Rastnocken im Betätigungshebel-Lagerabschnitt in rastender Ventilschließstellung,
- Fig. 26: die Längsschnittansicht von Fig. 25 mit dem Ventil in einer rastenden Teilöffnungsstellung und
- Fig. 27: die Längsschnittansicht von Fig. 25 mit dem Ventil in Öffnungsstellung.

In den Zeichnungen sind als exemplarische Ausführungsbeispiele der Erfindung verschiedene Varianten von Einhebelventilen bzw. Joystick-Ventilen und speziell Einhebel-Mischventilen veranschaulicht, die sich insbesondere für die Sanitärtechnik eignen. Gezeigt sind hierbei entsprechende Mischerkartuschen, die z.B. in entsprechende Sanitärarmaturen zur Bildung sanitärer Einhebel-Mischventile eingesetzt werden können, um zugeführtes Kaltwasser und Warmwasser in einem einstellbaren Verhältnis zu mischen und entsprechendes Mischwasser in einstellbarer Durchflussmenge abzugeben. Zum leichteren Verständnis sind in den verschiedenen Figuren gleiche oder funktionell äquivalente Elemente mit gleichen Bezugszeichen versehen. Derartige Elemente brauchen nicht wiederholt beschrieben zu werden. Ebenso bedarf es keiner ausführlichen Erläuterungen von gezeigten Elementen und deren Merkmalen und Funktionen, soweit selbige herkömmlicher Natur sind. Die Komponenten der Einhebel-Mischventile im Umfeld der gezeigten Mischerkartuschen sind ebenfalls herkömmlicher Natur und daher hier nicht weiter gezeigt.

Alle in den Figuren gezeigten Mischerkartuschen besitzen einen gleichartigen Aufbau mit einem im Wesentlichen zylinderförmigen Gehäusekörper 1, der zum Einsetzen in eine zugehörige Mischarmatur, wie eine sanitäre Mischarmatur, ausgebildet ist und in den fußseitig ein Kartuschenboden 2 eingefügt ist, während kopfseitig ein Kartuschendeckel 3 am Gehäusekörper 1 befestigt ist. Der Kartuschendeckel 3 weist eine im Wesentlichen mittige Austrittsöffnung 4 für einen stielförmigen Bedienabschnitt 5a eines Betätigungshebels 5 auf. Im Kartuschengehäuse 1 ist eine feststehende Steuerscheibe 6, auch Verteilerscheibe genannt, angeordnet, auf der eine weitere Steuerscheibe 7 planparallel gegenüber dieser beweglich aufliegt.

Der Betätigungshebel 5 weist im Anschluss an seinen stielförmigen Bedienabschnitt 5a einen verdickten Lagerabschnitt 5b auf, wobei die Verdickung in den gezeigten Beispielen als Vollkugelform realisiert ist. In alternativen Ausführungsformen kann der Betätigungshebel-Lagerabschnitt 5b eine andersartig verdickte Form haben, beispielsweise eine Teilkugelform, die sich nur über einen Teil des vollen Raumwinkels erstreckt, wie eine Halbkugelform etc. Auch nicht-kugelförmige Verdickungen sind für den Lagerabschnitt 5a je nach Bedarf und Anwendungsfall verwendbar. Fußseitig schließt sich an den verdickten Lagerabschnitt 5b ein Ventilkörperkoppelabschnitt 5c an, der in den gezeigten Beispielen als Koppelzapfen realisiert ist. Mit seinem Koppelzapfen 5c greift der Betätigungshebel 5 in eine Öffnung 8 einer Haltescheibe 9 ein, die mit einem Ansatz 10 in eine korrespondierende Ausnehmung 11 in der beweglichen Steuerscheibe 7 eingreift.

Mit seinem kugelig verdickten Lagerabschnitt 5b ist der Betätigungshebel 5a in einer als korrespondierende Lagerschale ausgebildeten Lageraufnahme gelagert, die von einem unteren Lagerschalenteil 12 und dem als einem oberen Lagerschalenteil fungierenden Kartuschendeckel 3 gebildet ist. Zwischen dem im Gehäusekörper 1 aufgenommenen, unteren Lagerschalenteil 12 und dem Kartuschendeckel 3 ist eine umlaufende Dichtung 13 eingebracht.

Die Lagerung des kugeligen Betätigungshebel-Lagerabschnitts 5b in der vom unteren Lagerschalenteil 12 und oberen Lagerschalenteil 3 gebildeten Kugelschale stellt somit grundsätzlich eine kugelgelenkige Beweglichkeit des Betätigungshebels 5 gegenüber dem Kartuschengehäuse 1 zur Verfügung. Durch eine Kulissenführung wird diese kugelgelenkige Beweglichkeit des Betätigungshebels 5 in eine Betätigungsrichtung zur Durchflussmengenregelung und in eine Betätigungsrichtung zur Einstellung des Kaltwasser/Warmwasser-Mischungsverhältnisses unterteilt. Daraus resultiert ein zweidimensionaler Verstellbereich des Betätigungshebels 5 für die beiden verschiedenen Steuerungsfunktionen des Mischventils. Der Verstellbereich weist mindestens eine Rastposition auf, in die der Betätigungshebel eingerastet ist, wenn er sich in einer entsprechenden Bedienstellung befindet, während er im übrigen Verstellbereich aus dieser Rastposition ausgerastet ist. Die Rastposition kann je nach Bedarf und Anwendungsfall einen nulldimensionalen, d.h. punktförmigen, oder eindimensionalen, d.h. linienförmigen, oder zweidimensionalen, d.h. flächigen, Teilbereich des Verstellbereichs bilden. Die Rastposition wird durch ein zugehöriges Rastmittel definiert, das sich charakteristischerweise im Bereich der Lagerung des Betätigungshebels 5 befindet, d.h. im Bereich seines verdickten Lagerabschnitts 5b und der gegenüberliegenden, gehäuseseitigen Lageraufnahme 3, 12.

Während der bislang geschilderte Ventilaufbau allen gezeigten Ausführungsbeispielen gemeinsam ist, unterscheiden sie sich in der konkreten Realisierung der Kulissenführung und/oder des/der Rastmittel zum Führen der Bewegung des Betätigungshebels und zum Bereitstellen gewünschter Betätigungshebel-Rastpositionen.

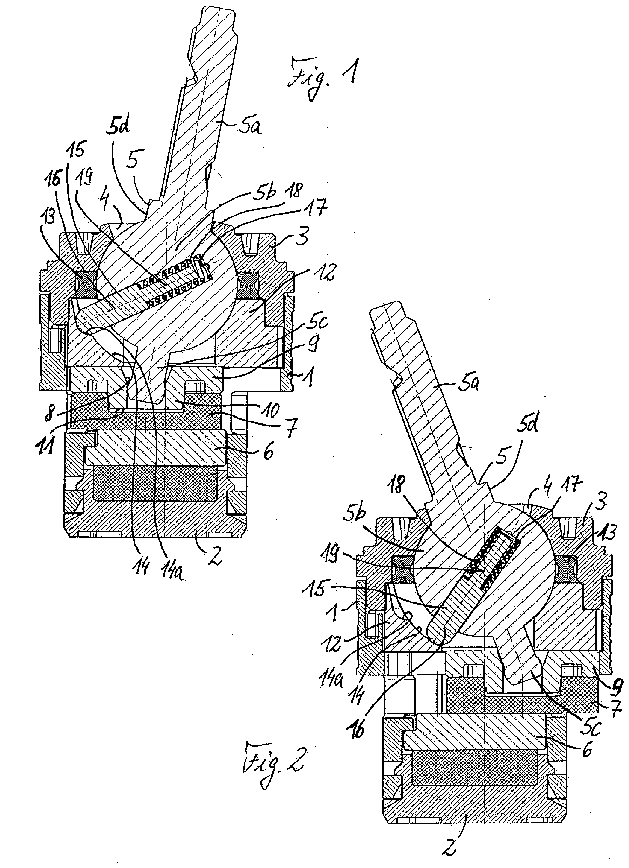

Beim Mischventil der Fig. 1 und 2 beinhaltet die Kulissenführung eine in der Schnittebene dieser Figuren liegende, in das untere Lagerschalenteil 12 eingebrachte Kulissenbahn 14 und einen darin geführten, als Kulissenstift ausgebildeten Kulissennocken 15, der mit seiner Längsachse 16 in einer Durchmesserachse des kugeligen Lagerabschnitts 5b liegend in eine Sackbohrung 17 des kugeligen Lagerungsabschnitts 5c des Betätigungshebels 5 eingesetzt ist. Dabei wird der Kulissenstift 15 durch eine in die Sackbohrung 17 eingesetzte Schraubendruckfeder 18 elastisch radial nach außen in die Kulissenbahn 14 im unteren Lagerschalenteil 12 gedrückt. Die Schraubenfeder 18 umgibt den Kulissenstift 15 in einem schmaleren, hinteren Abschnitt und fluchtet außenseitig mit seinem übrigen, vorderen Abschnitt.

Das Kulissenführungsmittel mit der in der Zeichenebene der Fig. 1 und 2 liegenden, sich in Umfangsrichtung im unteren Lagerschalenteil 12 erstreckenden Kulissenbahn 14 und dem darin entlang bewegbaren Kulissenstift 15 definiert eine entsprechende Verschwenkbarkeit des Betätigungshebels 5 um eine sich mittig durch den kugelförmigen Lagerabschnitt 5b hindurch senkrecht zur Zeichenebene der Fig. 1 und 2 erstreckende Schwenkachse 19. Diese kulissenbahngeführte Schwenkbewegung dient der Durchflussmengenregelung, wobei Fig. 1 das Ventil in seiner Schließstellung und Fig. 2 das Ventil in seiner vollen Öffnungsstellung, d.h. seiner Stellung für maximale Durchflussmenge, zeigt.

Für die Schließstellung des Ventils ist eine punktuelle Rastposition vorgesehen. Diese ist durch ein Rastmittel definiert, das den Kulissennocken 15 als federelastisch nachgiebiges Rastelement und eine radiale Vertiefung 14a der Kulissenbahn 14 in deren schließseitigem, im oberen Bereich des unteren Lagerschalenteils 12 gelegenem Abschnitt als Gegenrastelement beinhaltet. Beim Verschwenken des Betätigungshebels 5 von seiner Öffnungsstellung in seine Schließstellung rastet der Kulissenstift 15 bei Erreichen der Kulissenbahnvertiefung 14a unter dem vorspannenden Druck der Schraubenfeder 18 selbsttätig in die Kulissenbahnvertiefung 14a ein. Wie aus den Fig. 1 und 2 zu erkennen, sind sowohl die Kulissenbahnvertiefung 14a an ihrem Übergang zum nicht vertieften Kulissenbahnabschnitt als auch der mit der Kulissenbahn 14 und ihrer Rastvertiefung 14a zusammenwirkende Kopfbereich des Kulissenstifts 15 abgerundet geformt, so dass der Kulissenstift 15 nicht nur selbsttätig in die Kulissenbahnvertiefung 14a einrastet, sondern aus dieser auch wieder selbsttätig ausrastet, wenn der Betätigungshebel 5 aus seiner Schließstellung in Richtung Öffnungsstellung herausgeschwenkt wird.

Die Ein- und Ausrastbewegung des Kulissenstifts 15, der in diesem Beispiel als kombinierter Kulissen- und Rastnocken fungiert, erfolgt in Richtung seiner Längsachse 13, die sich als Durchmesserachse mitten durch den kugelförmigen Lagerabschnitt 5b des Bedienhebels 5 hindurch und senkrecht zur kulissenbahngeführten Schwenkbewegung um die Schwenkachse 19 erstreckt. Dies hat den Vorteil, dass einerseits ein sicheres Einrasten mit ausreichend hoher Rastkraft zur Verfügung gestellt werden kann und andererseits die Rastkraft aufgrund Hebelwirkung mit vergleichsweise geringer Bedienkraft überwunden werden kann, wenn der Benutzer den Betätigungshebel 5 aus seiner Schließstellung herausschwenken will. Die Bedienung des Betätigungshebels 5 erfolgt über ein übliches, nicht gezeigtes Griffteil, das auf den stielförmigen Bedienabschnitt 5a aufgesteckt wird, so dass die Bedienkraft am Betätigungshebel 5 mit einem Abstand zur Schwenkachse 19 angreift, der deutlich größer als der Abstand der Kulissenbahnvertiefung 14a von der Schwenkachse 19 ist, was die erwähnte Hebelwirkung bereitstellt, die das Ausrasten des Kulissen-/Raststifts 15 aus seiner Raststellung in der Kulissenbahnvertiefung 14a erleichtert. Ein weiterer Vorteil dieser Anordnung des Rastmittels am verdickten Lagerabschnitt 5b des Betätigungshebels 5 und der zugehörigen Lageraufnahme 3, 12 besteht darin, dass problemlos ausreichend Bauraum zur Unterbringung des selbsttätig ein- und ausrastenden, elastisch nachgiebig ausgeführten Rastmittels 14a, 15 vorhanden ist, insbesondere unter Ausnutzung des verdickten Betätigungshebel-Lagerabschnitts 5b.

Dabei sind die zusammenwirkenden abgerundeten Flächen der Kulissenbahnvertiefung 14a einerseits und des Kopfbereichs des Kulissen-/Raststifts 15 andererseits wie gezeigt so gestaltet, dass der Raststift 15 durch die elastische Federvorspannkraft in Richtung Erreichen der Schließstellungs-Rastposition gedrückt wird, sobald er die Kante am Übergang vom nicht vertieften Abschnitt der Kulissenbahn 14 zum vertieften Kulissenbahnabschnitt 14a überschreitet. Das so ausgeführte Rastmittel 14a, 15 unterstützt auf diese Weise das sichere Erreichen der Ventilschließstellung. Mit anderen Worten ist das Rastmittel 14a, 15 in der Lage, den Betätigungshebel 5 vollends in die Schließstellung zu führen, wenn er vom Benutzer in die Nähe der Schließstellung verschwenkt wurde. Dies beugt einem unabsichtlichen Wasserverlust vor, der ansonsten dadurch verursacht werden kann, dass der Benutzer den Betätigungshebel schon kurz vor Erreichen der Schließstellung loslässt.

Der Kulissen-/Raststift 15 bildet mit seiner Längsachse 16 eine zweite Schwenkachse, um die der Betätigungshebel 5 zur Einstellung des Mischungsverhältnisses von Kaltwasser und Warmwasser verschwenkt werden kann. Wie die erste Schwenkachse 19 bildet auch diese zweite Schwenkachse 16 eine mitten als Durchmesserachse durch den kugelförmigen Lagerabschnitt 5b des Betätigungshebels 5 hindurchgehende Drehachse. Während die erste Schwenkachse 19 zur Durchflussmengenregelung eine ortsfest bleibende Schwenkachse darstellt, ändert die zweite Schwenkachse 16 zur Mischungsverhältnisregelung ihre Lage in der zur ersten Schwenkachse senkrechten Ebene mit dem Verschwenken des Betätigungshebels 5 um die erste Schwenkachse 19. Insgesamt resultiert dies in dem erwähnten zweidimensionalen Verstellbereich zur Regelung sowohl der Durchflussmenge als auch des Kaltwasser/Warmwasser-Mischungsverhältnisses.

Der Betätigungshebel 5 nimmt über seinen Koppelzapfen 5c die bewegliche Haltescheibe 9 und die mit ihr bewegungsstarr verbundene, bewegliche Steuerscheibe 7 zu einer korrespondierenden Verstellbewegung parallel zur Trennebene von feststehender und beweglicher Steuerscheibe 6, 7 mit. Um die Umsetzung der Betätigungshebel-Drehbewegung in die ebene Haltescheibenbewegung zu ermöglichen, ist die den Koppelzapfen 5c aufnehmende Haltescheibenöffnung 8 geeignet konisch geformt. Die feststehende und die bewegliche Steuerscheibe 6, 7 sind in herkömmlicher, hier nicht gezeigter Weise mit geeignet zusammenwirkenden Öffnungsstrukturen versehen, über die das kalte und das warme Wasser zugeführt, im gewünschten Verhältnis gemischt und in der gewünschten Menge abgegeben werden.

Die zweidimensionale Verstellbewegung des Betätigungshebels 5 ist anschlagbegrenzt, wozu eine Anschlagschulter 5d am Betätigungshebel 5 vorgesehen ist, die gegen den Innenrand der Öffnung 4 im Kartuschendeckel 3 zum Anschlag kommt. Zusätzlich oder alternativ kann die Verstellbewegung dadurch begrenzt sein, dass die Haltescheibe 9 und/oder die bewegliche Steuerscheibe 7 gegen einen umgebenden Abschnitt des Kartuschengehäuses 1 zur Anlage kommt.

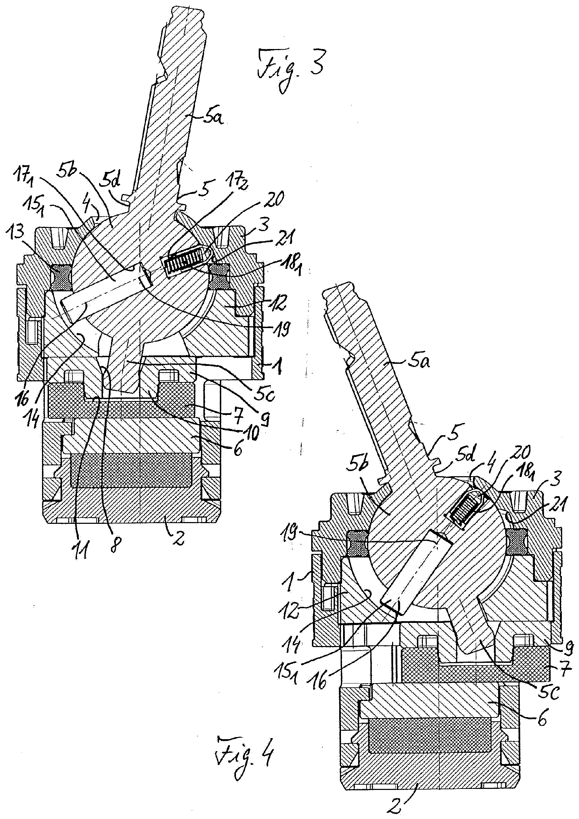

Die Fig. 3 und 4 zeigen als Variante des Mischventils der Fig. 1 und 2 ein Mischventil, bei dem die Kulissenführungsfunktion und die Rastfunktion räumlich voneinander getrennt realisiert sind. Beim Mischventil der Fig. 3 und 4 beinhaltet die Kulissenführung einen unbeweglich in eine radiale Sackbohrung 17₁ des kugelförmigen Betätigungshebel-Lagerabschnitts 5b eingefügten, zylindrischen Kulissenstift 14₁, der mit seinem radial über den kugelförmigen Lagerabschnitt 5b vorstehenden Kopfbereich in die Kulissenbahn 14 eingreift, die in gleicher Weise wie im Beispiel der Fig. 1 und 2 mit dem einzigen Unterschied ausgebildet ist, dass sie nicht die Rastvertiefung 14a aufweist. Die Kulissenführung definiert wiederum eine Schwenkbewegung des Betätigungshebels 5 um die zur Zeichenebene senkrechte, sich mitten durch den kugelförmigen Lagerabschnitt 5b hindurch erstreckende Schwenkachse 19 zur Durchflussmengeneinstellung.

Getrennt von der Kulissenführung weist das Mischventil der Fig. 3 und 4 ein Rastmittel auf, das wie im Ausführungsbeispiel der Fig. 1 und 2 eine punktuelle Schließstellungs-Rastposition bereitstellt und als Rastelement einen Rastnocken 20 beinhaltet, der zusammen mit einer radial nach außen vorspannenden Schraubenfeder 18₁ in eine zweite radiale Sackbohrung 17₂ im oberen Teil des kugelförmigen Betätigungshebel-Lagerabschnitts 5b eingesetzt ist. Als damit zusammenwirkendes Gegenrastelement beinhaltet das Rastmittel eine Rastkulisse bzw. Rastausnehmung 21, die in diesem Beispiel an der Lagerschaleninnenfläche des oberen Lagerschalenteils 3 ausgebildet ist. Die zusammenwirkenden Flächen von Rastnocken 20 einerseits und Rastausnehmung 21 andererseits sind wie im Beispiel der Fig. 1 und 2 derart gerundet ausgebildet, dass das Rastmittel mit der Schwenkbewegung des Betätigungshebels 5 zur Durchflussmengeneinstellung selbsttätig in die Schließstellung einrastbar und wieder aus dieser ausrastbar ist, wobei sie den Betätigungshebel 5 selbstzentrierend nachgiebig eingerastet in der Schließstellung gemäß Fig. 3 hält. Fig. 4 zeigt den Betätigungshebel 5 ausgerastet in seiner maximalen Öffnungsstellung. Zur Einstellung des Kaltwasser/Warmwasser-Mischungsverhältnisses wird der Betätigungshebel 5 wiederum um die Längsachse 16 des Kulissenstifts 15₁ als zweiter, nicht ortsfester Schwenkachse verschwenkt. Im Übrigen gelten die oben zum Mischventil der Fig. 1 und 2 erläuterten Funktionen und Vorteile für das Mischventil der Fig. 3 und 4 in gleicher Weise.

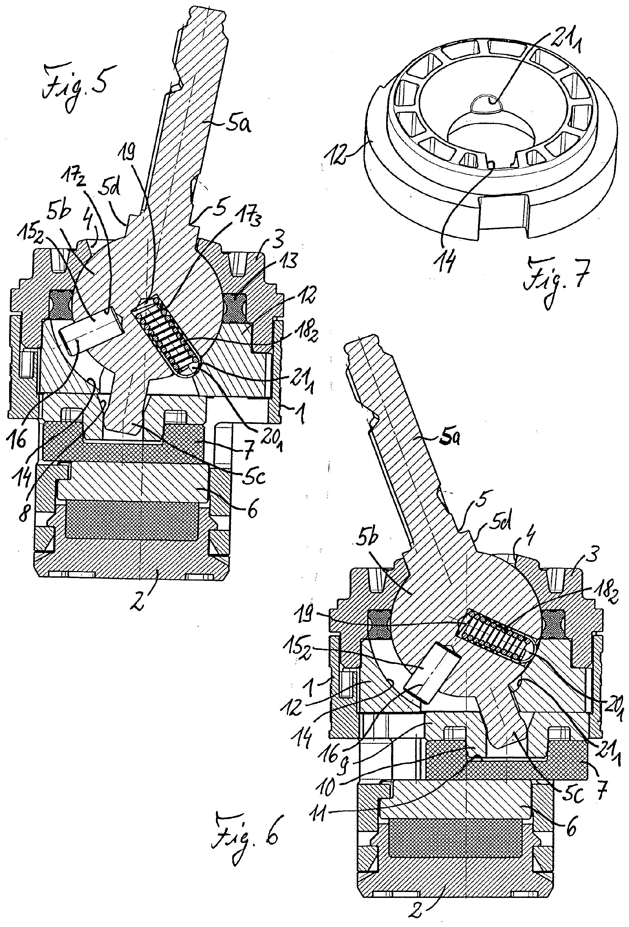

Die Fig. 5 bis 7 veranschaulichen ein Mischventil, das weitestgehend demjenigen der Fig. 3 und 4 entspricht. Als einziger wesentlicher Unterschied ist beim Mischventil der Fig. 5 bis 7 das Rastmittel zur Definition der Schließstellungs-Rastposition durch einen Rastnocken 20₁ und eine korrespondierende Rastausnehmung 21₁ gebildet, die in der unteren statt in der oberen Hälfte der Betätigungshebellagerung vorgesehen sind. Speziell ist dazu der Rastnocken 20₁ samt zugehöriger Schraubenfeder 18₂ in eine radiale Sackbohrung 17₃ in der unteren Hälfte des kugelförmigen Betätigungshebel-Lagerabschnitts 5b eingefügt, und die Rastausnehmung 21₁ ist korrespondierend in einem unteren Bereich des unteren Lagerschalenteils 12 ausgebildet. Wie aus der Einzeldarstellung des unteren Lagerschalenteils 12 in Fig. 7 deutlich zu erkennen, ist die Rastausnehmung 21₁ so gestaltet, dass sie den Rastnocken 20₁ punktuell und selbstzentrierend in seiner Einrastposition aufnimmt.

Während beim Mischventil der Fig. 3 und 4 die Sackbohrung 17₁ zur Aufnahme des Kulissenstifts 15₁ tiefer als die Sackbohrung 17₂ zur Aufnahme des Rastnockens 20 und seiner Vorspannfeder 18₁ ist, erstreckt sich beim Mischventil der Fig. 5 bis 7 die Rastmittel-Sackbohrung 17₃ mit größerer Tiefe als eine demgegenüber kürzere Sackbohrung 17₂ zur Aufnahme eines entsprechend kürzeren Kulissenstifts 15₂. Im Übrigen entspricht das Ventil der Fig. 5 bis 7 in seinen Funktionen, Eigenschaften und Vorteilen wiederum denjenigen der Fig. 1 bis 4.

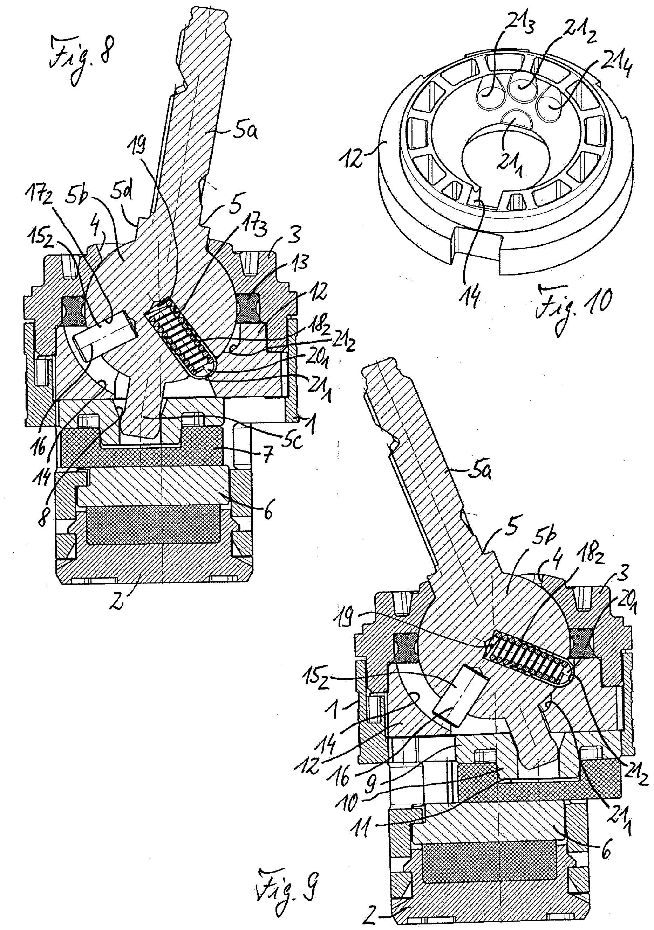

Ein in den Fig. 8 bis 10 veranschaulichtes Mischventil entspricht weitestgehend demjenigen der Fig. 5 bis 7 mit dem einzigen nennenswerten Unterschied, dass es zusätzlich zu dem die Schließstellungs-Rastposition definierenden Rastmittel drei weitere Rastmittel zur Definition weiterer zugehöriger Rastpositionen des Betätigungshebels 5 aufweist. Alle vier Rastmittel teilen sich den federelastisch radial nach außen vorgespannten, in der zugehörigen Sackbohrung 17₃ des Betätigungshebel-Lagerabschnitts 5b aufgenommenen Rastnocken 20₁. Als Gegenrastelemente sind zusätzlich zu der Schließstellungs-Rastausnehmung 21₁ drei weitere punktuelle, d.h. in ihrer Formgebung zum punktuellen Einrasten des Rastnockens 20₁ eingerichtete Rastausnehmungen 21₂, 21₃, 21₄ am unteren Lagerschalenteil 12 vorgesehen, wie insbesondere aus dessen Einzeldarstellung in Fig. 10 zu erkennen. Dabei gehören die drei weiteren Rastausnehmungen 21₂, 21₃, 21₄ zu unterschiedlichen Mischverhältnisstellungen des Betätigungshebels 5 bei jeweils maximaler Durchflussmenge. Eine mittlere Rastausnehmung 21₂ entspricht einer Ventilstellung mit maximaler Durchflussmenge und gleichen Kaltwasser- und Warmwasseranteilen, während die beiden anderen Rastausnehmungen 21₃, 21₄ eingerastete Betätigungshebelstellungen für maximalen Kaltwasserdurchfluss bzw. maximalen Warmwasserdurchfluss repräsentieren. Mit anderen Worten sind die drei zusätzlichen Rastausnehmungen 21₂, 21₃, 21₄ in Richtung der Schwenkbewegung des Betätigungshebels 5 um die Kulissennocken-Längsachse 16 bei maximaler Durchflusseinstellung nebeneinander angeordnet. Demgegenüber befindet sich die Schließstellungs-Rastausnehmung 21₁ in Richtung der durch die Kulissenbahn 14 gegebenen Schwenkrichtung des Betätigungshebels 5 um die Schwenkachse 19 neben bzw. unterhalb der das hälftige Kaltwasser/Warmwasser-Mischungsverhältnis bei maximaler Durchflussmenge repräsentierenden Rastausnehmung 21₂.

In ihrer selbsttätigen und selbstzentrierenden Rastwirkung entsprechen die durch die drei weiteren Rastausnehmungen 21₂, 21₃, 21₄ gegebenen Rastmittel dem durch die Schließstellungs-Rastausnehmung 21₁ gegebenen Rastmittel, so dass insoweit auf dessen obige Erläuterungen verwiesen werden kann. Die drei Rastmittel mit den Öffnungsstellungs-Rastausnehmungen 21₂, 21₃, 21₄ können dazu dienen, die Lage des Betätigungshebels 5 in den betreffenden Öffnungsstellungen zu stabilisieren. Dies kann beispielsweise in Fällen nützlich sein, in denen der Betätigungshebel 5 ein relativ hohes Gewicht hat. Die Öffnungsstellungs-Rastmittel mit den Öffnungsstellungs-Rastausnehmungen 21₂, 21₃, 21₄ können dann als Offenhaltungs-Rastmittel fungieren, die zuverlässig vermeiden, dass sich der Betätigungshebel 5 unbeabsichtigt schwerkraftbedingt aus einer Öffnungsstellung in Richtung Schließstellung bewegt. Analog kann selbstverständlich auch das Schließstellungs-Rastmittel 20₁, 21₁ dazu dienen, ein schwerkraftbedingtes Herausbewegen des Betätigungshebels 5 aus seiner Schließstellung in Richtung Öffnungsstellung zuverlässig zu vermeiden, wenn die Schwerkraft des Betätigungshebels 5 eine entsprechende Richtungskomponente besitzt.

Es versteht sich, dass in alternativen Ausführungsformen anstelle der vier gezeigten punktuellen Rastausnehmungen 21₁ bis 21₄ nur eine, zwei oder drei von diesen vorgesehen sein können und/oder andere solche punktuelle Rastausnehmungen an anderen Betätigungshebelstellungen zur Definition entsprechender punktueller, nulldimensionaler Betätigungshebel-Raststellungen innerhalb des zweidimensionalen Betätigungshebel-Verstellbereichs vorgesehen sein können. Dieser hat bezogen auf die Kugelschale der Lagerung ungefähr die Form einer dreieckigen Kugelkalotte, deren Eckbereiche durch die Schließstellung entsprechend der Rastausnehmung 21₁ und durch die beiden maximalen Kaltwasser- bzw. Warmwasser-Stellungen entsprechend den Rastausnehmungen 21₃ und 21₄ gegeben sind. Diese Form hat der Betätigungshebel-Verstellbereich auch in den anderen gezeigten Ausführungsbeispielen, bedingt durch das jeweils gleiche Verstellprinzip in Form der kulissenbahngeführten Verschwenkung um die ortsfeste Schwenkachse 19 und die Schwenkbewegung um die ortsveränderliche Kulissennocken-Längsachse 16.

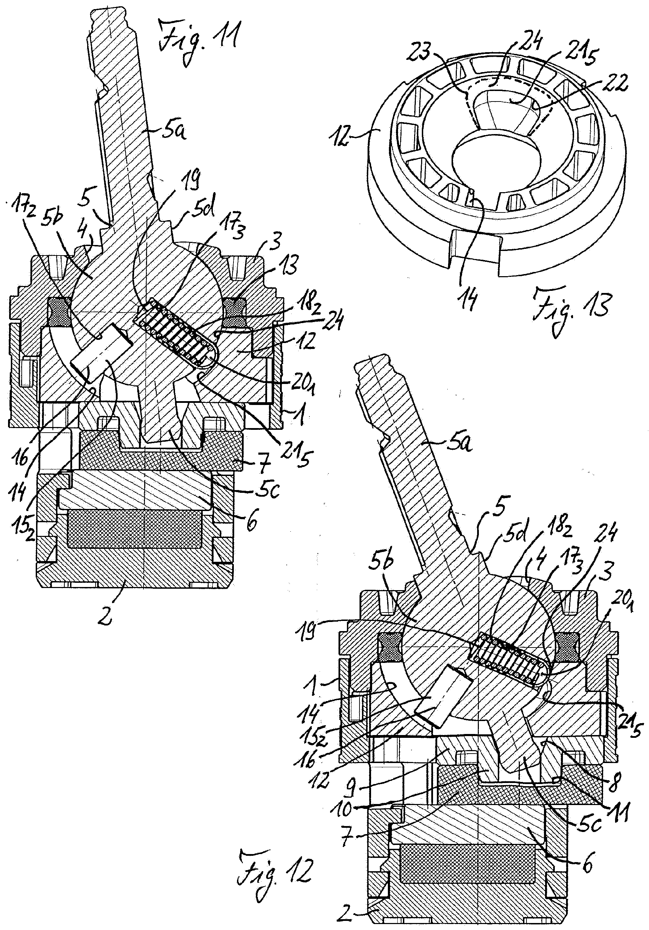

Die Fig. 11 bis 13 veranschaulichen ein Mischventil, das weitestgehend demjenigen der Fig. 8 bis 10 mit der Ausnahme entspricht, dass statt den dortigen punktuellen Rastpositionen eine flächige, zweidimensionale Rastposition zur Definition der sogenannten Sparstellung vorgesehen ist. Dazu weist in diesem Fall das untere Lagerschalenteil 12 eine flächige Rastausnehmung 21₅ in ihrem betreffenden Kugelschalenabschnitt auf, die einen Teilbereich des gesamten Betätigungshebel-Verstellbereichs abgrenzt, wobei dieser Teilbereich denjenigen Betätigungshebelstellungen entspricht, bei denen die eingestellte Durchflussmenge unterhalb eines vorgebbaren Schwellwertes liegt, der durch einen entsprechenden Begrenzungsrand 22 der Rastausnehmung 21₅ bestimmt ist.

Zur Veranschaulichung ist in der Einzelansicht des unteren Lagerschalenteils 12 in Fig. 13 mit einer gestrichelten Linie 23 der gesamte zweidimensionale Betätigungshebel-Verstellbereich symbolisiert, d.h. der Rastnocken 20₁ kann sich beim Verstellen des Betätigungshebels 5 innerhalb der von dieser Linie 23 umgrenzten Fläche der Kugelschale des unteren Lagerschalenteils 12 bewegen. Solange der Rastnocken 20₁ innerhalb der Rastausnehmung 21₅ eingerastet ist, befindet sich das Mischventil in der Sparstellung mit limitierter Wasserdurchflussmenge. Wenn der Benutzer den Betätigungshebel 5 in Richtung größerer Durchflussmenge betätigt, rastet der Rastnocken 20₁ federelastisch nachgiebig aus der Rastausnehmung 21₅ aus und gelangt in einen ausgerasteten Restbereich 24 des zweidimensionalen Verstellbereichs 23. Dabei wird dem Benutzer durch das Rastmittel 20₁, 21₅ die Überschreitung des zur Sparstellung gehörigen Durchflussmengen-Schwellwertes haptisch rückgemeldet. Fig. 12 zeigt das Ventil in einer solchen ausgerasteten Betätigungshebelstellung für höhere Durchflussmenge. Wie daraus ersichtlich, ist der Rastnocken 20₁ entgegen der Druckkraft der Schraubenfeder 18₂ in die zugehörige Aufnahmebohrung 17₃ des kugelförmigen Betätigungshebel-Lagerabschnitts 5b zurückgedrückt und liegt gegen den Bereich 24 des unteren Lagerschalenteils 12 außerhalb der Rastausnehmung 21₅ an. Fig. 11 zeigt das Ventil in der Sparstellung, in welcher sich der Rastnocken 20₁ in seiner in die Rastausnehmung 21₅ eingerasteten, radial aus der Aufnahmebohrung 17₃ des kugelförmigen Lagerabschnitts 5b vorstehenden Stellung befindet.

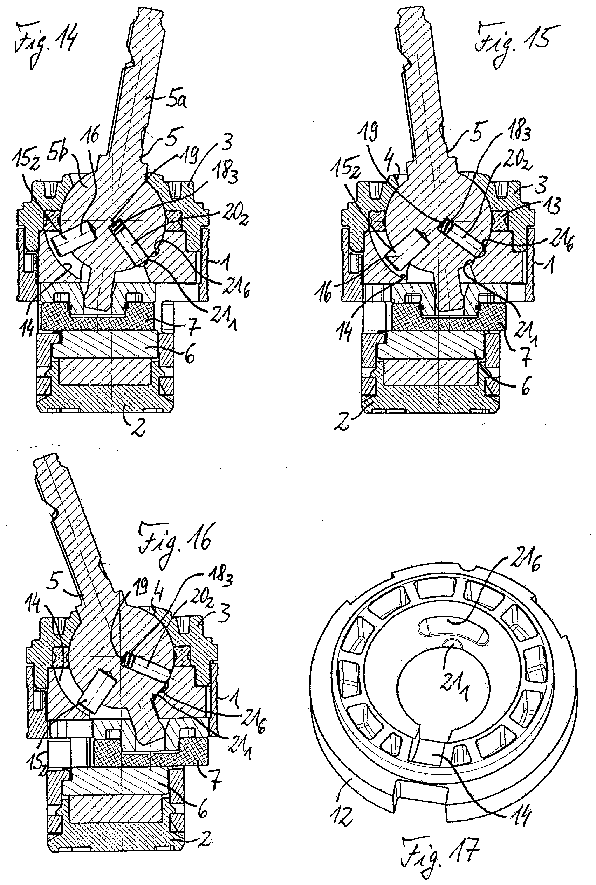

Die Fig. 14 bis 17 veranschaulichen ein Mischventil, das weitestgehend denjenigen der Fig. 5 bis 12 mit einer weiteren Rastmittelmodifikation entspricht. Speziell sind beim Ventil der Fig. 14 bis 17 die Schließstellungs-Rastposition sowie eine lineare Teilöffnungs-Rastposition vorgesehen. Letztere definiert einen eingerasteten Einstellbereich mit variablem Kaltwasser/Warmwasser-Mischungsverhältnis, jedoch gleichbleibender, unterhalb des maximalen Wertes liegender Durchflussmenge, z.B. einer ungefähr dem halben Maximalwert entsprechender Durchflussmenge. Die beiden zugehörigen Rastmittel teilen sich einen gemeinsamen Rastnocken 20₂, der in seiner Lage und Anordnung dem Rastnocken 20₁ der Ventile der Fig. 5 bis 12 mit der Modifikation entspricht, dass er als längerer Raststift ausgebildet ist, der von hinten durch eine entsprechend modifizierte Schraubenfeder 18₃ radial nach außen vorgespannt ist.

Mit dem Raststift 20₂ wirkt zur Definition der punktuellen Schließstellungsrastung die Schließstellungs-Rastausnehmung 21₁ am unteren Lagerschalenteil 12 zusammen, wie sie z.B. auch bei den Ventilen der Fig. 5 bis 8 vorgesehen ist. Zur Bereitstellung der Teilöffnungsrastung weist das untere Lagerschalenteil 12 als mit dem Raststift 20₂ zusammenwirkendes Gegenrastelement eine sich in Umfangsrichtung über den Verstellbereich hinweg bogenförmig erstreckende Rastausnehmung 21₆ auf. Bei Verstellbewegungen des Betätigungshebels zur Veränderung des Kaltwasser/Warmwasser-Mischungsverhältnisses bewegt sich der Raststift 20₂ in bzw. entlang dieser bogenförmigen Rastausnehmung 21₆, wenn er in diese eingerastet ist, wodurch die Durchflussmenge konstant gehalten wird. Diese Teilöffnungsrastung erleichtert folglich dem Benutzer das Konstanthalten der Durchflussmenge bei Änderung des Mischungsverhältnisses. Das Verlassen dieser Teilöffnungsstellung, z.B. zum Einstellen einer höheren Durchflussmenge, wird dem Benutzer dann wieder haptisch am Betätigungshebel 5 rückgemeldet, mit dem er den Ausrastwiderstand des federelastisch vorgespannten Raststifts 20₂ überwinden muss.

In Fig. 14 ist das Ventil in seiner punktuell eingerasteten Schließstellung gezeigt, in welcher sich der Raststift 20₂ in der Schließstellungs-Rastausnehmung 21₁ befindet. Fig. 15 zeigt das Ventil in seiner eingerasteten Teilöffnungsstellung, in welcher sich der Raststift 20₂ in der zugehörigen Rastausnehmung 21₆ befindet. Fig. 16 zeigt das Ventil in einer ausgerasteten, vollen Öffnungsstellung mit maximaler Durchflussmenge.

Es versteht sich, dass in alternativen Ausführungsformen Varianten dieser Kombination einer nulldimensionalen, punktuellen Rastposition, hier der Schließstellungs-Rastposition, und einer linearen, eindimensionalen Rastposition, hier der Teilöffnungsstellung, je nach Bedarf realisierbar sind. So können zusätzlich eine oder mehrere der punktuellen Raststellungen bei maximaler Durchflussmenge vorgesehen sein, wie sie zum Ventil der Fig. 8 bis 10 erläutert wurden. In einer entsprechenden Ausführungsform ist nur die lineare Teilöffnungs-Rastposition vorgesehen. Während im gezeigten Ausführungsbeispiel die lineare Teilöffnungs-Rastposition eine gleichbleibende Durchflussmenge bei sich änderndem Kaltwasser/Warmwasser-Mischungsverhältnis repräsentiert, können alternative Ausführungsformen eine lineare Rastposition aufweisen, die das Mischungsverhältnis bei sich ändernder Durchflussmenge konstant hält. Im Fall der Verwendung des gezeigten unteren Lagerschalenteils 12 kann dies durch eine Rastausnehmung realisiert sein, die ähnlich wie die Kulissenbahn 14 in axialer Richtung im entsprechenden Lagerschalenabschnitt verläuft.

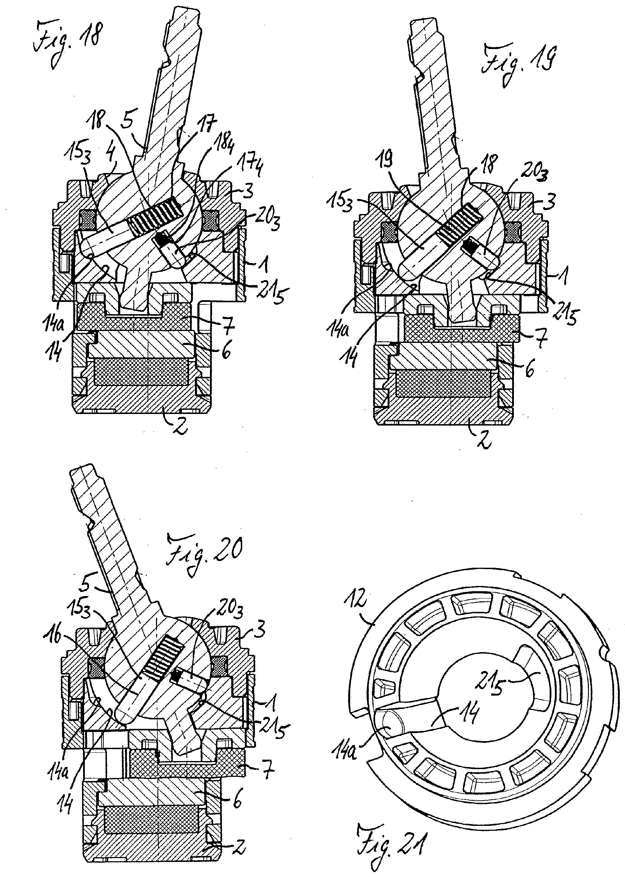

Die Fig. 18 bis 21 veranschaulichen ein Mischventil, bei dem eine Schließstellungs-Rastposition mit kombiniertem Kulissenführungs-/Rastmittel nach Art des Ventils der Fig. 1 und 2 kombiniert ist mit einer Sparstellungs-Rastposition nach Art des Ventils der Fig. 11 bis 13. Dazu besitzt dieses Ventil einen kombinierten Kulissen-/Rastnocken 15₃, der in Lage und Anordnung demjenigen der Fig. 1 und 2 entspricht. Korrespondierend dazu ist die Kulissenbahn 14 mit der Schließstellungs-Rastausnehmung 14a wie beim Ventil der Fig. 1 und 2 versehen. Der Kulissenbahn 14 diametral gegenüberliegend ist im unteren Lagerschalenteil 12 die flächige Rastausnehmung 21₅ als zweidimensionaler Teilbereich des Betätigungshebel-Verstellbereichs mit begrenzter Durchflussmenge wie beim Ventil der Fig. 11 bis 13 vorgesehen. Mit dieser Sparstellungs-Rastausnehmung 21₅ wirkt ein Rastnocken bzw. Raststift 20₃ zusammen, der entsprechend der Lage des Rastnockens 20₁ beim Ventil der Fig. 11 bis 13 in eine gegenüber der dortigen Sackbohrung 17₃ verkürzte Sackbohrung 17₄ unter Vorspannung einer zugehörigen Schraubenfeder 18₄ radial nach außen vorgespannt eingefügt ist.

Dieses Mischventil ermöglicht folglich sowohl das zuverlässige Erreichen der Schließstellung durch die punktuelle Schließstellungs-Rastposition, wenn der kombinierte Kulissen-/Raststift 15₃ in die Kulissenbahnvertiefung 14a einrastet, als auch die Bereitstellung des zweidimensionalen Sparstellungsbereichs, dessen Verlassen dem Benutzer beim Einstellen höherer Durchflussmengen dadurch haptisch rückgemeldet wird, dass er den Ausrastwiderstand des Raststifts 17₄ überwinden muss. Da die Kulissenbahn-Rastausnehmung 14a einerseits und die Sparstellungs-Rastausnehmung 21₅ andererseits auf gegenüberliegenden Seiten des unteren Lagerschalenteils 12 ausgebildet sind, können die beiden Rastpositionen ohne Bauraumprobleme unabhängig voneinander festgelegt werden. Fig. 18 zeigt das Mischventil in seiner Schließstellung, in welcher der kombinierte Kulissen-/Raststift 15₃ in die Kulissenbahnausnehmung 14a und der Raststift 20₃ in die Sparstellungs-Rastausnehmung 21₅ eingerastet sind. Fig. 19 zeigt das Ventil in einer teilgeöffneten Sparstellung, in welcher der Kulissen-/Raststift 15₃ aus dem vertieften Teil 14a der Kulissenbahn 14 ausgerastet ist und der Raststift 20₃ noch in der Sparstellungs-Rastausnehmung 21₅ eingerastet ist. Fig. 20 zeigt das Ventil in einer vollen Öffnungsstellung mit maximaler Durchflussmenge, in welcher beide Raststifte 15₃, 20₃ aus ihren zugehörigen Rastausnehmungen 14a, 21₅ ausgerastet sind.

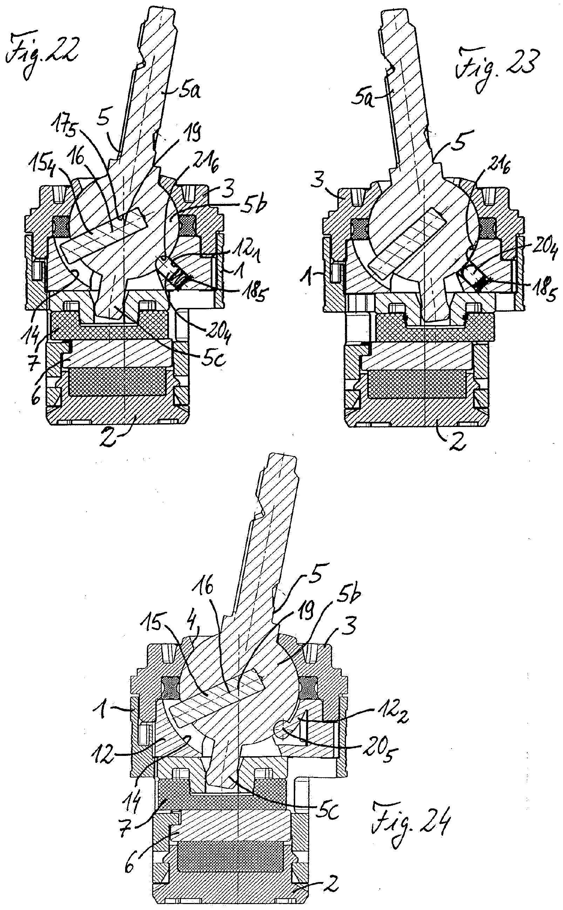

Die Fig. 22 und 23 veranschaulichen ein Mischventil, das weitestgehend demjenigen der Fig. 5 bis 7 mit der Modifikation entspricht, dass die Anordnung von Rastnocken und Rastausnehmung am kugelförmigen Betätigungshebel-Lagerabschnitt 5b einerseits und am unteren Lagerschalenteil 12 andererseits vertauscht ist. Speziell ist in dem Bereich, in welchem sich beim Ventil der Fig. 5 bis 7 die Schließstellungs-Rastausnehmung 21₁ befindet, beim Ventil der Fig. 22 und 23 ein Raststift 20₄ samt zugehöriger Druckfeder 18₅ in einer zugehörigen radialen Sackbohrung 12₁ im unteren Lagerschalenteil 12 angeordnet.

Korrespondierend zum Raststift 12₄ im unteren Lagerschalenteil 12 ist der kugelförmige Betätigungshebel-Lagerabschnitt 5b im gegenüberliegenden Bereich mit einer Schließstellungs-Rastausnehmung 21₆ versehen, die wie bei den anderen gezeigten Ausführungsbeispielen in ihrer abgerundeten Form passend auf die abgerundete Kopfform des Raststifts 20₄ abgestimmt ist, so dass auch in diesem Fall das dadurch gebildete Rastmittel mit der Betätigungsbewegung des Betätigungshebels 5 selbsttätig federelastisch nachgiebig ein- und ausrastbar ist. Fig. 22 zeigt das Mischventil in seiner Schließstellung, in welcher der Raststift 20₄ in die Rastausnehmung 21₆ des kugelförmigen Betätigungshebel-Lagerabschnitts 5b eingerastet ist. Fig. 23 zeigt das Ventil in seiner aus der Schließstellung ausgerasteten Öffnungsstellung, in welcher der Raststift 20₄ gegen die Kraft der Druckfeder 18₅ vom kugelförmigen Lagerabschnitt 5b in das untere Lagerschalenteil 12 zurückgedrückt ist.

Für die Kulissenführung dient in diesem Beispiel ein in die Kulissenbahn 14 eingreifender Kulissennocken 15₄, der als relativ langer Stift in eine entsprechend tiefe, radiale Sackbohrung 17₅ des kugelförmigen Betätigungshebel-Lagerabschnitts 5b eingefügt ist.

Fig. 24 veranschaulicht ein Mischventil, das demjenigen der Fig. 22 und 23 mit dem Unterschied entspricht, dass als Rastelement des Schließstellungs-Rastmittels anstelle des Rastnockens 20₄ ein formelastisch durch das untere Lagerschalenteil 12 selbst gebildeter Rastnocken 20₅ fungiert. Der Rastnocken 20₅ bildet einen verdickten Kopfteil einer geeignet im entsprechenden Kugelschalenbereich des unteren Lagerschalenteils 12 ausgebildeten Rastzunge 12₂, die von ihrem Fußbereich axial nach unten und radial nach innen entlang dem gegenüberliegenden Bereich des kugelförmigen Betätigungshebel-Lagerabschnitts 5b verläuft und mit ihrem den Rastnocken 20₅ bildenden Kopfbereich elastisch radial nach innen gegen diesen andrückt.

Dieses Mischventil kommt folglich ohne eine Aufnahmebohrung für einen federelastischen Raststift aus. In der gezeigten Stellung von Fig. 24 befindet sich das Ventil in seiner Schließstellung, in welcher der Rastzungenkopf 20₅ in die Schließstellungs-Rastausnehmung 21₆ am kugelförmigen Betätigungshebel-Lagerabschnitt 5b eingerastet ist. Die Formgebung des Rastnockens 20₅ und der Rastausnehmung 21₆ sind wiederum so aufeinander abgestimmt, dass das Rastmittel durch die Bewegung des Betätigungshebels 5 aus der Schließstellung heraus selbsttätig ausrastet und dem Benutzer eine haptische Rückmeldung hierüber gibt. Außerdem bringt das Rastmittel den Betätigungshebel selbstzentrierend sicher in die Schließstellung, auch wenn der Benutzer den Betätigungshebel kurz vor Erreichen der Schließstellung loslässt.

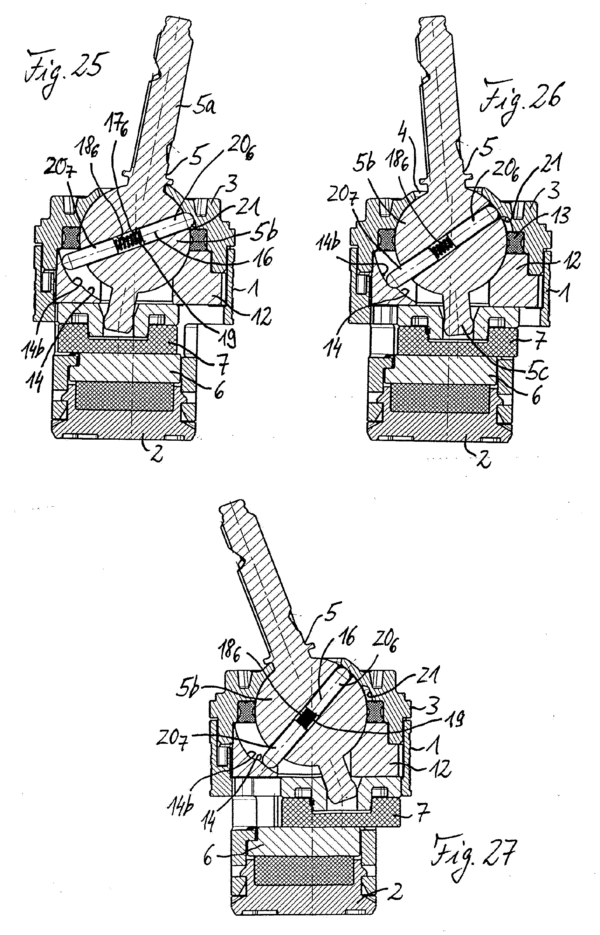

Die Fig. 25 bis 27 veranschaulichen ein Mischventil, das wie das Mischventil der Fig. 18 bis 21 eine punktuelle Schließstellungs-Rastposition mit einer flächigen Sparstellungs-Rastposition kombiniert, wobei es für das Sparstellungs-Rastmittel die am Kartuschendeckel bzw. dem oberen Lagerschalenteil 3 vorgesehene Rastausnehmung 21 verwendet. Eine in diesem Fall flächige Ausnehmung bzw. Vertiefung 14b der Kulissenbahn 14 dient als Sparstellungs-Rastposition entsprechend der Funktion beispielsweise der Sparstellungs-Rastausnehmung 21₅ beim Ventil der Fig. 18 bis 21.

Als mit den Ausnehmungen 21, 14b zusammenwirkende Rastelemente dienen zwei gleichartige Raststifte 20₆, 20₇, die in eine durch den kugelförmigen Betätigungshebel-Lagerabschnitt 5b längs einer Durchmesserlinie durchgehende Aufnahmebohrung 17₆ unter Zwischenfügung einer Schraubendruckfeder 18₆ eingesetzt sind. Durch die Druckfeder 18₆ werden die beiden Raststifte 20₆, 20₇ radial nach außen gegen den oberen bzw. den unteren Lagerschalenteil 3, 12 vorgespannt. Diese Rastelementanordnung dient gleichzeitig als Kulissennocken, indem der Raststift 20₇ in die Kulissenbahn 14 eingreift und in dieser geführt ist.

Die Längsachse der Aufnahmebohrung 17₆ bzw. der beiden eingefügten Raststifte 20₆, 20₇ bildet hierbei die zweite Schwenkachse 16, um die der Betätigungshebel 5 zur Verstellung des Kaltwasser/Warmwasser-Mischungsverhältnisses verschwenkt werden kann. Die Durchflussmengenregelung erfolgt wiederum durch Verschwenken des Betätigungshebels 5 um die zur Zeichenebene senkrechte Schwenkachse 19 geführt durch die Kulissenführung 14, 20₇.

Fig. 25 zeigt das Mischventil in seiner punktuell eingerasteten Schließstellung, in welcher der Raststift 20₆ in die Schließstellungs-Rastausnehmung 21 im Kartuschendeckel 3 eingreift und sich der Raststift 20₇ im Bereich der zweidimensionalen Sparstellungs-Rastung befindet, d.h. in den vertieften Bereich 14b der Kulissenbahn 14 eingreift. Fig. 26 zeigt das Ventil in einer aus seiner Schließstellung ausgerasteten Teilöffnungsstellung, in welcher der Raststift 20₆ aus der Schließstellungs-Rastausnehmung 21 ausgerastet ist und der Raststift 20₇ gerade noch in der Sparstellungs-Vertiefung 14b der Kulissenbahn 14 liegt. Fig. 27 zeigt das Ventil in einer vollen Öffnungsstellung mit maximaler Durchflussmenge, in welcher beide Raststifte 20₆, 20₇ aus ihren zugehörigen Rastausnehmungen 21, 14b ausgerastet sind.

Das Mischventil der Fig. 25 bis 27 benötigt nur die eine durchgehende Aufnahmebohrung 17₆ im kugelförmigen Betätigungshebel-Lagerabschnitt 5b, in welcher die beiden Raststifte 20₆, 20₇ mit ihrer zwischenliegenden Druckfeder 18₆ als entsprechendes Durchsteckfederelement aufgenommen sind. Die lagerschalenseitig gegenüberliegende Anordnung der zugehörigen Rastaufnahmen 21, 14b zum Festlegen der nulldimensionalen Schließstellungs-Rastung und der zweidimensionalen Sparstellungs-Rastung hat den Vorteil, dass die beiden Rastungen ohne Bauraumprobleme an gewünschten Stellen ausgebildet sein können, ohne sich in unerwünschter Weise zu beeinträchtigen bzw. zu überlagern, selbst bei vergleichsweise kleiner Bauform des Ventils.

Wie die gezeigten und oben erläuterten Ausführungsbeispiele deutlich machen, stellt die Erfindung ein Einhebelventil zur Verfügung, das in vorteilhafter Weise ein oder mehrere Rastmittel aufweist, die mit Betätigung des Betätigungshebels selbsttätig ein- und ausrastbar sind und im Bereich der Lagerung des Betätigungshebels selbst angeordnet sind. Dazu wird der durch den verdickten Lagerabschnitt des Betätigungshebels zur Verfügung stehende Bauraum genutzt.

Es versteht sich, dass außer den gezeigten und den darüber hinaus oben erwähnten Ausführungsformen weitere Ausführungsformen der Erfindung mit modifizierter Rastmittelanordnung realisierbar sind, z.B. auch in Form von weiteren Kombinationen der in den gezeigten Ventilen realisierten Rastmittel. Während bei den gezeigten Beispielen das jeweilige Rastmittel rein radial wirkt, d.h. durch eine bezüglich der Lagerung rein radiale Rastkraft, umfasst die Erfindung auch Ausführungsformen, bei denen das Rastmittel nicht genau radial wirkend angeordnet ist, sondern mit einer radialen Hauptkomponente schräg zur Radialrichtung wirkt, z.B. durch entsprechend mit radialer Hauptkomponente und einer kleineren Umfangsrichtungskomponente in den verdickten Betätigungshebel schräg eingebrachten Bohrungen zur Aufnahme eines jeweiligen Rastnockens bzw. Raststifts. Weiter versteht sich, dass die Erfindung nicht nur für sanitäre Einhebel-Mischventile verwendbar ist, sondern auch entsprechende Einhebelventile für andere Zwecke umfasst, wie reine Einhebel-Absperrventile für sanitäre und andere Einsatzzwecke.

## Patentansprüche

1. Einhebelventil, insbesondere sanitäres Einhebel-Mischventil, mit
- einem beweglich angeordneten Ventilkörper (7),
- einem Betätigungshebel (5), der einen stielförmigen Bedienabschnitt (5a), einen demgegenüber verdickten Lagerabschnitt (5b) und einen mit dem Ventilkörper gekoppelten Ventilkörperkoppelabschnitt (5c) aufweist,
- einer Lageraufnahme (3, 12), in welcher der Betätigungshebel mit seinem Lagerabschnitt innerhalb eines ein- oder zweidimensionalen Verstellbereichs beweglich aufgenommen ist, wobei der Verstellbereich mindestens eine Schwenkbewegung des Betätigungshebels um eine zu seiner Längsachse nichtparallele, sich durch den verdickten Lagerabschnitt hindurch erstreckende Schwenkachse (19) umfasst, und
- mindestens einem Rastmittel, das in einer eingerasteten Stellung eine zugehörige Rastposition des Betätigungshebels innerhalb seines Verstellbereichs definiert und mit einer Betätigungsbewegung des Betätigungshebels selbsttätig einrastbar und ausrastbar ist und ein Rastelement (15) sowie ein mit diesem zusammenwirkendes Gegenrastelement (14a) beinhaltet, von denen das eine am verdickten Lagerabschnitt des Betätigungshebels und das andere an der Lageraufnahme ausgebildet ist,
- wobei das mindestens eine Rastmittel einen elastisch beweglich gehaltenen Rastnocken und eine korrespondierende Rastausnehmung (21₁, 21₂, 21₃, 21₄) als Rastelement und Gegenrastelement beinhaltet, wobei das mindestens eine Rastmittel mindestens zwei Rastmittel mit unterschiedlichen zugehörigen Rastpositionen des Betätigungshebels umfasst, die sich einen gemeinsamen Rastnocken (20₁) als Rastelement teilen oder zwei Rastnocken (20₆, 20₇) beinhalten, die mit einem zwischengefügten elastischen Element (18₆) in einer gemeinsamen Durchgangsbohrung (17₆) des verdickten Lagerabschnitts angeordnet sind, und/oder
wobei der verdickte Lagerabschnitt kugelförmig und die Lageraufnahme kugelschalenförmig ausgebildet sind und das Rastmittel eine Rastbeweglichkeit mit zum kugelförmigen Lagerabschnitt radialer Hauptkomponente aufweist,
- wobei der kugelförmige Lagerabschnitt und die kugelschalenförmige geraufnahme durch ein Kulissenführungsmittel mit einer Kulissenbahn (14) einerseits und einem darin beweglich geführten Kulissennocken (15) andererseits miteinander gekoppelt sind, wobei das Kulissenführungsmittel eine Schwenkbewegung des Betätigungshebels um eine zu dessen Längsachse senkrechte erste Durchmesserachse (19) des kugelförmigen Lagerabschnitts definiert und der Betätigungshebel zusätzlich um den Kulissennocken schwenkbeweglich ist, dessen Längsachse eine zur ersten nichtparallele zweite Durchmesserachse (16) des kugelförmigen Lagerabschnitts bildet.

2. Einhebelventil nach Anspruch 1, weiter **dadurch gekennzeichnet, dass** die Rastposition des Betätigungshebels einer Ventilschließstellung oder einer vollen Ventilöffnungsstellung oder einer Ventilteilöffnungsstellung entspricht.

3. Einhebelventil nach Anspruch 1 oder 2, weiter **dadurch gekennzeichnet, dass** das Rastmittel als elastisch nachgiebiges Rastmittel, das in Richtung seiner eingerasteten Stellung vorgespannt ist, und/oder als selbstzentrierendes Rastmittel ausgebildet ist, das den Betätigungshebel zentriert in die zugehörige Rastposition bringt.

4. Einhebelventil nach einem der Ansprüche 1 bis 3, weiter **dadurch gekennzeichnet, dass** der Kulissennocken (15) zugleich als Rastnocken des betreffenden Rastmittels fungiert.

5. Einhebelventil nach einem der Ansprüche 1 bis 4, weiter **dadurch gekennzeichnet, dass** der Kulissennocken (15₁) und ein Rastnocken (20) des betreffenden Rastmittels als separate Bauteile in zugehörigen Sackbohrungen (17₁, 17₂) mit radialer Hauptkomponente des kugelförmigen Lagerabschnitts angeordnet sind.

6. Einhebelventil nach einem der Ansprüche 1 bis 5, weiter **dadurch gekennzeichnet, dass** die kugelschalenförmige Lageraufnahme einen unteren und einen oberen Lagerschalenteil (12, 3) umfasst, die als separate, miteinander verbundene Bauteile ausgebildet sind, wobei das Kulissenführungsmittel und das mindestens eine Rastmittel zum Einen am verdickten Betätigungshebel-Lagerabschnitt und zum Anderen beide am unteren Lagerschalenteil oder beide am oberen Lagerschalenteil oder das eine am unteren und das andere am oberen Lagerschalenteil angeordnet sind.

## Claims

1. One-lever valve, in particular sanitary one-lever mixing valve, comprising:
- a movably arranged valve body (7),
- an actuation lever (5) which comprises a stick-shaped operation section (5a), a bearing section (5b) thickened relative thereto, and a valve body coupling section (5c) coupled to the valve body,
- a bearing receptacle (3, 12) in which the actuation lever together with its bearing section is received movably within a one-dimensional or two-dimensional displacement region, wherein the displacement region comprises at least one pivot movement of the actuation lever around a pivot axis (19) non-parallel to its longitudinal axis and extending through the thickened bearing section, and
- at least one snap means, which in a snapped-in position defines an associated snap position of the actuation lever within its displacement region and which is capable of being snapped-in and snapped-out self-actingly with an actuation movement of the actuation lever and which includes a snap element (15) as well as a counter snap element (14a) interacting with said snap element, of which elements one is formed on the thickened bearing section of the actuation lever and the other one is formed on the bearing receptacle,
- wherein the at least one snap means includes an elastically movably-held snap cam and a corresponding snap recess (21₁, 21₂, 21₃, 21₄) as snap element and counter snap element, wherein the at least one snap means includes at least two snap means with different associated snap positions of the actuation lever, which share a common snap cam (20₁) as snap element or include two snap cams (20₆, 20₇), which are arranged together with an interposed elastic element (18₆) in a common through hole (17₆) of the thickened bearing section, and/or
- wherein the thickened bearing section is formed in the shape of a ball and the bearing receptacle in the shape of a spherical shell and the snap means has a snap mobility with a main component radial to the ball-shaped bearing section,
- wherein the ball-shaped bearing section and the spherical shell-shaped bearing receptacle are coupled to one another by means of a sliding guide means on the one hand to a sliding guide track (14) and on the other hand to a sliding cam (15) movably guided therein, wherein the sliding guide means defines a pivot movement of the actuation lever around a first diameter axis (19) of the ball-shaped bearing section perpendicular to the longitudinal axis of said actuation lever and the actuation lever is additionally pivotably movable around the sliding cam, the longitudinal axis of which forms a second diameter axis (16) of the ball-shaped bearing section non-parallel to the first diameter axis.

2. One-lever valve according to claim 1, further **characterized in that** the snap position of the actuation lever corresponds to a valve closed position or to a full valve open position or to a valve partial open position.

3. One-lever valve according to claim 1 or 2, further **characterized in that** the snap means is formed as an elastically resilient snap means, which is biased in the direction of its snapped-in position, and/or as a self-centering snap means which centers the actuation lever into the associated snap position.

4. One-lever valve according to any of claims 1 to 3, further **characterized in that** the sliding cam (15) at the same time acts as snap cam of the corresponding snap means.

5. One-lever valve according to any of claims 1 to 4, further **characterized in that** the sliding cam (15₁) and a snap cam (20) of the corresponding snap means are arranged as separate components in associated blind holes (17₁, 17₂) having a radial main component of the ball-shaped bearing section.

6. One-lever valve according to any of claims 1 to 5, further **characterized in that** the spherical shell-shaped bearing receptacle comprises a lower and an upper bearing shell part (12, 3), which are formed as separate components connected to one another, wherein the sliding guide means and the at least one snap means on the one hand are arranged on the thickened actuation lever bearing section and on the other hand are both arranged on the lower bearing shell part or are both arranged on the upper bearing shell part or one is arranged on the lower and the other one is arranged on the upper bearing shell part.

## Revendications

1. Vanne à un levier, en particulier vanne de mélangeur sanitaire à un levier, comprenant
- un corps de vanne (7) disposé de manière déplaçable,
- un levier d'actionnement (5), qui présente une portion de commande en forme de manche (5a), une portion de palier (5b) épaissie par rapport à celle-ci et une portion d'accouplement de corps de vanne (5c) accouplée au corps de vanne,
- un logement de palier (3, 12) dans lequel est reçu de manière déplaçable le levier d'actionnement avec sa portion de palier à l'intérieur d'une région de réglage mono- ou bidimensionnelle, la région de réglage comprenant au moins un mouvement de pivotement du levier d'actionnement autour d'un axe de pivotement (19) non parallèle à son axe longitudinal, s'étendant à travers la portion de palier épaissie, et
- au moins un moyen d'encliquetage qui définit, dans une position encliquetée, une position d'encliquetage associée du levier d'actionnement à l'intérieur de sa région de réglage et qui peut être encliqueté et désencliqueté automatiquement par un mouvement d'actionnement du levier d'actionnement et qui comprend un élément d'encliquetage (15) ainsi qu'un élément d'encliquetage conjugué (14a) coopérant avec celui-ci, dont l'un est réalisé au niveau de la portion de palier épaissie du levier d'actionnement et l'autre est réalisé au niveau du logement de palier,
- l'au moins un moyen d'encliquetage contenant une came d'encliquetage retenue de manière déplaçable élastiquement et un évidement d'encliquetage correspondant (21₁, 21₂, 21₃, 21₄) en tant qu'élément d'encliquetage et élément d'encliquetage conjugué, l'au moins un moyen d'encliquetage comprenant au moins deux moyens d'encliquetage avec des positions d'encliquetage associées différentes du levier d'actionnement, qui divisent une came d'encliquetage commune (20₁) en tant qu'élément d'encliquetage ou qui comprennent deux cames d'encliquetage (20₆, 20₇) qui sont disposées avec un élément élastique intermédiaire (18₆) dans un alésage de passage commun (17₆) de la portion de palier épaissie, et/ou la portion de palier épaissie étant réalisée sous forme sphérique et le logement de palier étant réalisé sous forme de coque sphérique et le moyen d'encliquetage présentant une mobilité d'encliquetage avec des composantes principales radiales par rapport à la portion de palier de forme sphérique,
- la portion de palier de forme sphérique et le logement de palier en forme de coque sphérique étant accouplés l'un à l'autre par un moyen de guidage à coulisse avec une piste de coulissement (14) d'une part et une came de coulisse (15) guidée de manière déplaçable dans celle-ci d'autre part, le moyen de guidage à coulisse définissant un mouvement de pivotement du levier d'actionnement autour d'un premier axe diamétral (19) de la portion de palier de forme sphérique perpendiculaire à son axe longitudinal et le levier d'actionnement étant en outre déplaçable par pivotement autour de la came de coulisse, dont l'axe longitudinal forme un deuxième axe diamétral (16) de la portion de palier sphérique, non parallèle au premier.

2. Vanne à un levier selon la revendication 1, **caractérisée en outre en ce que** la position d'encliquetage du levier d'actionnement correspond à une position de fermeture de vanne ou à une position d'ouverture complète de vanne ou à une position d'ouverture partielle de vanne.

3. Vanne à un levier selon la revendication 1 ou 2, **caractérisée en outre en ce que** le moyen d'encliquetage est réalisé en tant que moyen d'encliquetage flexible élastiquement, qui est précontraint dans la direction de sa position encliquetée, et/ou en tant que moyen d'encliquetage à autocentrage, qui amène le levier d'actionnement de manière centrée dans la position d'encliquetage associée.

4. Vanne à un levier selon l'une quelconque des revendications 1 à 3, **caractérisée en outre en ce que** la came de coulisse (15) sert également de came d'encliquetage du moyen d'encliquetage concerné.

5. Vanne à un levier selon l'une quelconque des revendications 1 à 4, **caractérisée en outre en ce que** la came de coulisse (15₁) et une came d'encliquetage (20) du moyen d'encliquetage concerné sont disposées en tant que composants séparés dans des alésages borgnes associés (17₁, 17₂) avec une composante principale radiale de la portion de palier de forme sphérique.

6. Vanne à un levier selon l'une quelconque des revendications 1 à 5, **caractérisée en outre en ce que** le logement de palier en forme de coque sphérique comprend une partie de coque de palier inférieure et une partie de coque de palier supérieure (12, 3) qui sont réalisées sous forme de composants séparés connectés l'un à l'autre, le moyen de guidage de coulisse et l'au moins un moyen d'encliquetage d'une part étant disposés au niveau de la portion de palier de levier d'actionnement épaissie et d'autre part les deux étant disposés au niveau de la partie de coque de palier inférieure ou les deux étant disposés au niveau de la partie de coque de palier supérieure ou l'un étant disposé au niveau de la partie de coque de palier inférieure et l'autre étant disposée au niveau de la partie de coque de palier supérieure.
